# EUROPÄISCHE PATENTANMELDUNG

(11) **EP 2 653 752 A1**
(43) Veröffentlichungstag der Anmeldung: **23.10.2013**
(21) Anmeldenummer: 12164624.4
(22) Anmeldetag: 18.04.2012
(51) Int. Cl.: F16H 57/033

(54) **Baureihe von Getriebegehäusen**

(71) Anmelder: Siemens Aktiengesellschaft, 80333 München (DE)
(72) Erfinder: Schnurr, Wolfgang, 72147 Nehren (DE); Stoll, Robert, 72070 Tuebingen (DE)

(57) **Zusammenfassung**

Die Erfindung betrifft eine Baureihe von Getriebegehäusen (Gij), welche verschiedene Baugrößen umfasst. Jede Baugröße umfasst eine Serie verschiedener Gehäuse-Bautypen, welche für mindestens zwei verschiedene Getriebetypen folgender Typen geeignet sind: Stirnradgetriebe, Kegelradgetriebe, Flachgetriebe und Schneckengetriebe. Jedes Getriebegehäuse (Gij) weist antriebsseitig eine Gehäuseöffnung (10) auf, welche von einem Antriebsflansch (11) zum Anschluss eines Motors, einer Adapterplatte oder eines weiteren Getriebes umgeben ist. In mindestens zwei verschiedenen Baugrößen liegen jeweils für mindestens zwei verschiedene Bautypen die senkrecht zur Ebene des Antriebsflansches (11) verlaufenden Achsen (20) von zur Aufnahme von Wellenlagern für Verzahnungsteile vorgesehenen Lagerstellen (21), in Blickrichtung senkrecht zur Ebene des Antriebsflansches (11) gesehen, innerhalb eines minimalen Innendurchmessers (b1) des Antriebsflansches (11).

## Beschreibung

Die vorliegende Erfindung betrifft eine Baureihe von Getriebegehäusen.

Für eine kostengünstige Lagerhaltung und Montage ist es wünschenswert, die verschiedenen Getriebe einer Getriebereihe mit einer möglichst universellen Schnittstelle zum Anbau eines Motors, einer Adapterplatte oder eines weiteren Getriebes auszustatten.

Aufgabe der vorliegenden Erfindung ist es, eine Baureihe von Getriebegehäusen anzugeben, welche eine verbesserte Schnittstelle zum Anbau eines Motors, einer Adapterplatte oder eines weiteren Getriebes aufweisen.

Diese Aufgabe wird erfindungsgemäß durch eine Baureihe von Getriebegehäusen mit den in Anspruch 1 angegebenen Merkmalen gelöst.

Die erfindungsgemäße Baureihe von Getriebegehäusen umfasst verschiedene Baugrößen. Jede Baugröße umfasst eine Serie verschiedener Gehäuse-Bautypen. Die Gehäuse-Bautypen sind für mindestens zwei verschiedene Getriebetypen folgender Typen geeignet: Stirnradgetriebe, Kegelradgetriebe, Flachgetriebe und Schneckengetriebe. Jedes Getriebegehäuse weist antriebsseitig eine Gehäuseöffnung auf. Die Gehäuseöffnung ist von einem Antriebsflansch zum Anschluss eines Motors, einer Adapterplatte oder eines weiteren Getriebes umgeben. In mindestens zwei verschiedenen Baugrößen liegen jeweils für mindestens zwei verschiedene Bautypen die senkrecht zur Ebene des Antriebsflansches verlaufenden Achsen von Lagerstellen, welche zur Aufnahme von Wellenlagern für Verzahnungsteile vorgesehen sind, in Blickrichtung senkrecht zur Ebene des Antriebsflansches innerhalb eines minimalen Innendurchmessers des Antriebsflansches.

Verschiedene Baugrößen unterscheiden sich durch die Gehäuseabmessungen, die insbesondere durch die Achsabstände der ersten Getriebestufe bedingt sind, und damit durch die Leistungsauslegung.

Der Antriebsflansch ist ein antriebsseitiger Anschlussflansch, der als eine plane Fläche ausgebildet ist, an welcher ein Anschlussflansch eines Motors, eines weiteren Getriebes oder einer Adapterplatte befestigt wird, wobei üblicherweise zwischen den beiden aufeinander liegenden Flanschen ein Dichtmittel, z.B. ein Dichtungsring, angeordnet ist. Eine in diese Fläche gelegte Ebene wird als Ebene des Antriebsflansches bezeichnet.

Lagerstellen werden auch Lagersitze genannt. Jedem Lagersitz kann eine Achse zugeordnet werden, die mit einer Achse eines in den Lagersitz einzusetzenden Wellenlagers bzw. einer in dem Wellenlager gelagerten Welle überein stimmt. Mit dem Begriff "Verzahnungsteile" werden alle miteinander in Eingriff stehenden oder miteinander kämmenden, rotierend gelagerten Bauteile bezeichnet, beispielsweise Stirnräder, Kegelräder, Ritzel und Schneckenräder.

Der Erfindung liegt die Erkenntnis zugrunde, dass ein erheblicher Nutzen und Vorteil im Hinblick auf Lagerhaltung, Montage und Wartung von Getriebegehäusen und darauf basierenden Getrieben, insbesondere Industriegetrieben, erzielt wird, wenn ein Verzahnungsteile aufnehmender Innenraum der Getriebegehäuse über die Antriebsschnittstelle optimal zugänglich ist. Durch eine maximal mögliche Vergrößerung der Gehäuseöffnung wird erreicht, dass die senkrecht zur Ebene des Antriebsflansches verlaufenden Achsen von Lagerstellen, welche zur Aufnahme von Wellenlagern für Verzahnungsteile vorgesehen sind, in Blickrichtung senkrecht zur Ebene des Antriebsflansches innerhalb eines minimalen Innendurchmessers des Antriebsflansches liegen. Somit sind diese vorgenannten Achsen unkompliziert zugänglich, was der einfachen und effizienten Montage und Wartung, z.B. der Einstellbarkeit der Lager, dient.

Für ein Kegelradgetriebe ergibt sich insbesondere der Vorteil, dass die axiale Lagerposition der senkrecht zur Ebene des Antriebsflansches verlaufenden Wellen innerhalb der Gehäuseöffnung es ermöglicht, dass die Lager dieser Wellen von der Motorseite her montierbar sind und ausreichend Platz für eine Deckelabdichtung bleibt. Das Lager der Kegelritzelwelle ist somit ebenfalls von der Motorseite her montierbar und die Bohrung des Kegelritzelwellenlagers von der Motorseite herstellbar.

Die Erfindung schafft eine Schnittstelle auf der Getriebeeingangsseite von Baukastengetrieben zum Anbau von verschiedenen Arten von Motoren wie Asynchron- oder Servomotoren und Adaptern zum Einbau von IEC- bzw. NEMA-Motoren sowie weiteren Getrieben (IEC = International Electrotechnical Commission; NEMA = National Electrical Manufacturers Association). Insbesondere schafft die Erfindung an einer motorseitigen Gehäuseöffnung eines Getriebegehäuses eine universelle Motor-Getriebe-Schnittstelle.

Vorteilhafte Ausgestaltungen und Weiterbildungen der Erfindung sind in den abhängigen Ansprüchen angegeben.

Gemäß einer bevorzugten Ausgestaltung der Erfindung liegen in mindestens zwei verschiedenen Baugrößen jeweils für alle Bautypen die senkrecht zur Ebene des Antriebsflansches verlaufenden Achsen von Lagerstellen, welche zur Aufnahme von Wellenlagern für Verzahnungsteile vorgesehen sind, in Blickrichtung senkrecht zur Ebene des Antriebsflansches innerhalb des minimalen Innendurchmessers des Antriebsflansches liegen. Von Vorteil ist dabei, dass die Montage und Wartung von Wellenlagern, Wellen und Verzahnungsteile durch die gut zugängliche Lage innerhalb der Gehäuseöffnung erheblich vereinfacht wird. Gemäß einer bevorzugten Weiterbildung der Erfindung liegt bei einem für ein Stirnradgetriebe geeigneten Bautyp in allen Baugrößen ein Verhältnis von einem maximalen Außendurchmesser des Antriebsflansches zu einem Achsabstand von zur Aufnahme von Wellenlagern für Verzahnungsteile einer ersten Getriebestufe vorgesehenen Lagerstellen in einem Bereich von 2,74 bis 3,00. Von Vorteil ist dabei, dass bei diesem Wertebereich die Montage und Wartung von Wellenlagern, Wellen und Verzahnungsteile einer ersten Getriebestufe durch die gut zugängliche Lage innerhalb der Gehäuseöffnung erheblich vereinfacht wird.

Es ist möglich, dass bei einem für ein Stirnradgetriebe geeigneten Bautyp in allen Baugrößen ein Verhältnis von einem minimalen Außendurchmesser des Antriebsflansches zu einem minimalen Innendurchmesser des Antriebsflansches in einem Bereich von 1,07 bis 1,21 liegt. Von Vorteil ist dabei, dass bei diesem Wertebereich die Öffnungsweite der zugänglichen Gehäuseöffnung im Hinblick auf die gegebenen Baumaße des Gehäuses optimiert ist, so dass die Montage und Wartung von Wellenlagern, Wellen und Verzahnungsteile durch die gut zugängliche Lage innerhalb der Gehäuseöffnung erheblich vereinfacht wird.

Gemäß einer bevorzugten Weiterbildung der Erfindung sind in dem Antriebsflansch Lochbohrungen angeordnet, welche auf einem Lochkreis mit einem Durchmesser liegen und zur Aufnahme von Verbindungsschrauben vorgesehen sind, und wobei bei einem für ein Stirnradgetriebe geeigneten Bautyp in allen Baugrößen ein Verhältnis von einem minimalen Außendurchmesser des Antriebsflansches zu dem Lochkreisdurchmesser in einem Bereich von 0,97 bis 1,05 liegt. Von Vorteil ist dabei, dass bei diesem Wertebereich der Anschlusskreis mit seiner Dichtfunktion im Hinblick auf die gegebenen Baumaße des Gehäuses möglichst platzsparend ausgebildet ist, so dass die Öffnungsweite der zugänglichen Gehäuseöffnung maximiert ist. Auf diese Weise wird die Montage und Wartung von Wellenlagern, Wellen und Verzahnungsteile durch die gut zugängliche Lage innerhalb der Gehäuseöffnung erheblich vereinfacht.

Vorzugsweise weist der Antriebsflansch an zwei gegenüberliegenden Seiten Abflachungen auf, deren Abstand voneinander den minimalen Außendurchmesser des Antriebsflansches definiert. Durch die Abflachungen wird der Außendurchmesser des Anschlussflansches an der schmalsten Stelle des Gehäuses reduziert, so dass der Abschlussflansch das Gehäuse nicht überragt.

Gemäß einer bevorzugten Weiterbildung der Erfindung weist der Antriebsflansch Lochbohrungen auf, welche punktsymmetrisch auf einem Lochkreis mit einem Lochkreisdurchmesser angeordnet und zur Aufnahme von Verbindungsschrauben vorgesehen sind. Die Verbindungsschrauben verbinden den Antriebsflansch mit einem korrespondierenden Anschlussflansch eines Motors oder eines Getriebes.

Gemäß einer bevorzugten Ausgestaltung der Erfindung verläuft der Lochkreis über seinen gesamten Umfang ununterbrochen auf dem Antriebsflansch. Es ist also eine ununterbrochene Anschlussfläche geschaffen. Somit kann die durch die Verbindungsschrauben erzeugte Druckkraft ohne Unterbrechung ein Dichtungsmittel, z.B. einen Dichtring, beaufschlagen, so dass eine zuverlässige Abdichtung des Antriebsflansches erzielt wird.

Gemäß einer bevorzugten Ausgestaltung der Erfindung weist der im Wesentlichen kreisringförmige Antriebsflansch an zwei gegenüberliegenden Seiten Abflachungen auf. Dabei sind in dem Antriebsflansch acht Lochbohrungen angeordnet, wobei in jeder Hälfte des durch eine Abstandsgerade der Abflachungen geteilten Antriebsflansches vier Lochbohrungen angeordnet sind. Unter "Abstandsgerade" wird eine in der Ebene des Antriebsflansches verlaufende Gerade verstanden, die mit der kürzesten Verbindungslinie der gegenüber liegenden Abflachungen zusammenfällt, also mit der Strecke zusammenfällt, welche die beiden einander nächstliegenden Punkte der gegenüber liegenden Abflachungen verbindet. Durch das symmetrische Lochbild wird eine zuverlässige Abdichtung des Antriebsflansches erzielt. Gemäß einer bevorzugten Ausgestaltung der Erfindung sind die Lochbohrungen außerhalb der und symmetrisch zu der Abstandsgerade und einer senkrecht dazu verlaufenden Quergerade angeordnet. An den Abflachungen des Antriebsflansches ist die Flanschbreite reduziert. Eine Lochbohrung an einer solchen Engstelle würde die Breite eines Dichtmittels weiter reduzieren, so dass eine zuverlässige Abdichtung nicht zu gewährleisten wäre. Dadurch, dass die Lochbohrungen außerhalb der Abstandsgerade und der Quergerade liegen, d.h. außerhalb der Hauptachsen des Antriebsflansches, kann an diesen Engstellen eine ausreichende Breite eines Dichtungsmittels sichergestellt werden.

Gemäß einer bevorzugten Weiterbildung der Erfindung sind die vier in einer Flanschhälfte angeordneten Lochbohrungen so positioniert, dass eine erste Lochbohrung in einem ersten Winkel zur Abstandsgerade, eine zweite Lochbohrung in einem zweiten Winkel zur ersten Lochbohrung und eine dritte Lochbohrung in einem dritten Winkel zur zweiten Lochbohrung angeordnet ist, wobei die Winkel jeweils von einem Mittelpunkt des Lochkreises aus gesehen gemessen sind, und wobei ein Verhältnis von dem ersten zu dem dritten Winkel konstant, vorzugsweise 1/2, ist und eine Summe der drei Winkel in einem Bereich von 112,5 bis 118,5 liegt. Durch diese Winkellage der Lochbohrungen wird ein Antriebsflansch mit einem für alle Getriebegehäuse einheitlichen Lochbild geschaffen, wodurch die Austauschbarkeit erhöht und die Lagerhaltung vereinfacht wird.

Gemäß einer bevorzugten Weiterbildung der Erfindung ist ein Getriebe, insbesondere Stirnradgetriebe, Kegelradgetriebe oder Flachgetriebe, mit einem Getriebegehäuse aus einer Baureihe nach einem der Ansprüche 1 bis 11 ausgebildet. Besonders gut eignet sich die erfindungsgemäße Baureihe von Getriebegehäusen für Baukastengetriebemotoren.

Im Folgenden wird die Erfindung anhand mehrerer Ausführungsbeispiele unter Zuhilfenahme der beiliegenden Zeichnungen erläutert. Es zeigt
- Fig. 1: eine Ansicht eines Getriebegehäuses mit Blick auf einen Antriebsflansch;
- Fig. 2: einen Schnitt eines Getriebes mit dem erfindungsgemäßen Getriebegehäuse von Fig. 1, mit der Schnittebene senkrecht zur Ebene eines Antriebsflansches;
- Fig. 3: eine Ansicht wie in Fig. 1, mit einer Angabe der Abmessungen;
- Fig. 4: eine Tabelle der Abmessungen;
- Fig. 5: eine schematische Ansicht eines Antriebsflansches mit einer Angabe von Winkeln der Lochbohrungen;
- Fig. 6: eine Tabelle der Winkel; und
- Fig. 7-9: schematische Ansichten eines Antriebsflansches eines Getriebegehäuses mit einer Angabe von Lagerstellen für ein Stirnradgetriebe (Fig. 7), ein Flachgetriebe (Fig. 8) und ein Kegelradgetriebe (Fig. 9).

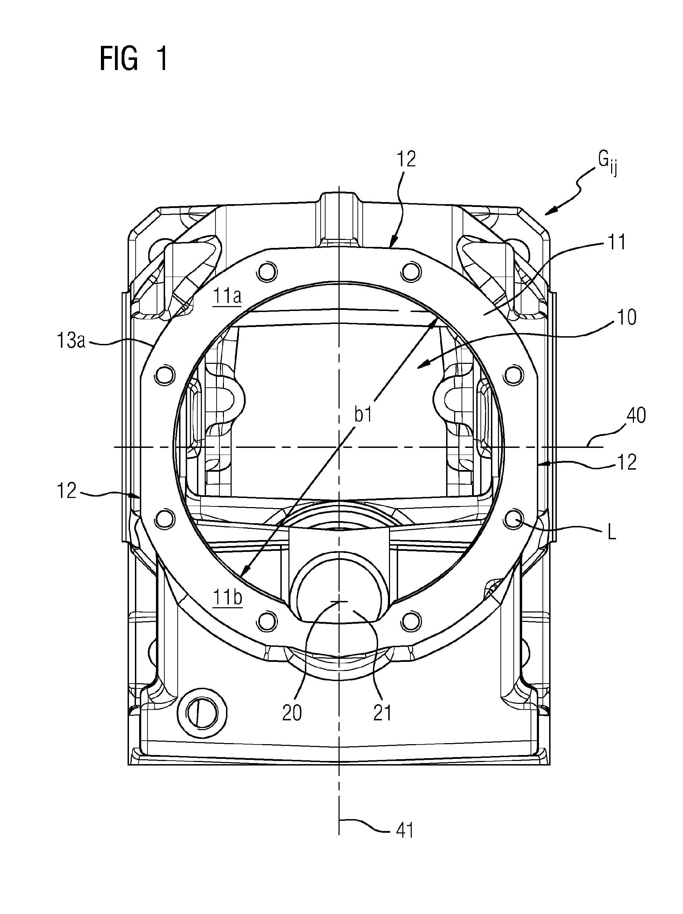

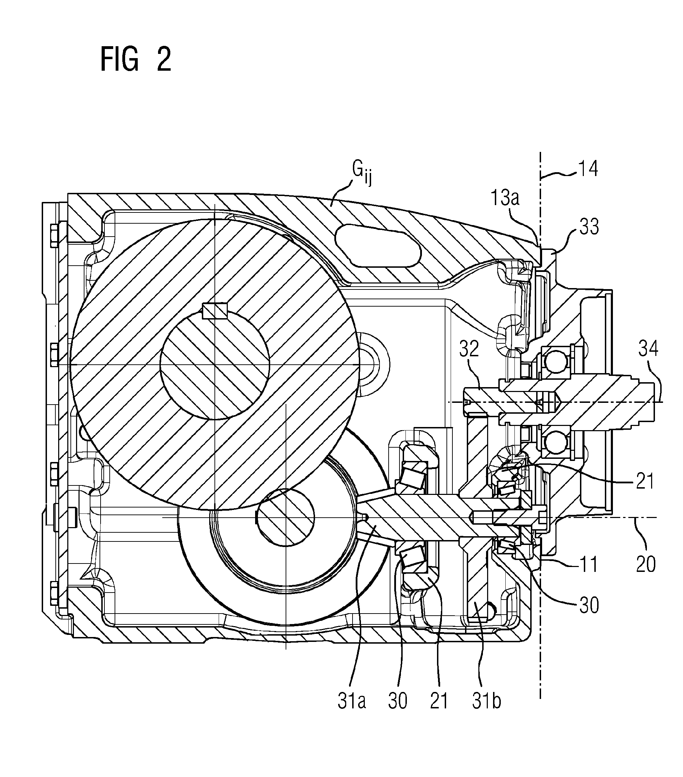

Fig. 1 zeigt eine Ansicht eines Getriebegehäuses Gij, welches zu einer Baureihe von Getriebegehäusen gehört, welche verschiedene Baugrößen der Getriebegehäuse umfasst. Fig. 2 zeigt einen Schnitt eines Kegelradgetriebes mit dem in Fig. 1 dargestellten Getriebegehäuse Gij, wobei die Schnittebene senkrecht zur Ebene 14 des Antriebsflansches 11 verläuft.

Das Getriebegehäuse Gij ist für den Getriebetyp Kegelradgetriebe geeignet. Das Getriebegehäuse Gij weist antriebsseitig eine Gehäuseöffnung 10 auf, welche durch eine Adapterplatte zum Anbau eines Motors verschlossen ist. Die senkrecht zur Ebene 14 des Antriebsflansches 11 verlaufenden Achsen 20 von zur Aufnahme von Wellenlagern, hier: die Kegelritzelwellenlager 30, für Verzahnungsteile, hier: das das Kegelritzel 31a und das mit einem Antriebsritzel 32 kämmende Zahnrad 31b der Antriebsstufe, vorgesehenen Lagerstellen 21 liegen, in der in Fig. 1 dargestellten Blickrichtung, d.h. senkrecht zur Ebene 14 des Antriebsflansches 11 gesehen, innerhalb eines minimalen Innendurchmessers b1 des Antriebsflansches 11.

Der im Wesentlichen kreisringförmige Antriebsflansch 11 weist an zwei gegenüberliegenden Seiten Abflachungen 12 der Außenkante 13a auf. In dem Antriebsflansch 11 sind acht Lochbohrungen L angeordnet sind, welche auf einem Lochkreis LK liegen und zur Aufnahme von Verbindungsschrauben vorgesehen sind. In jeder Hälfte 11a und 11b des durch eine Abstandsgerade 40 der Abflachungen 12 geteilten Antriebsflansches 11 sind vier Lochbohrungen L angeordnet.

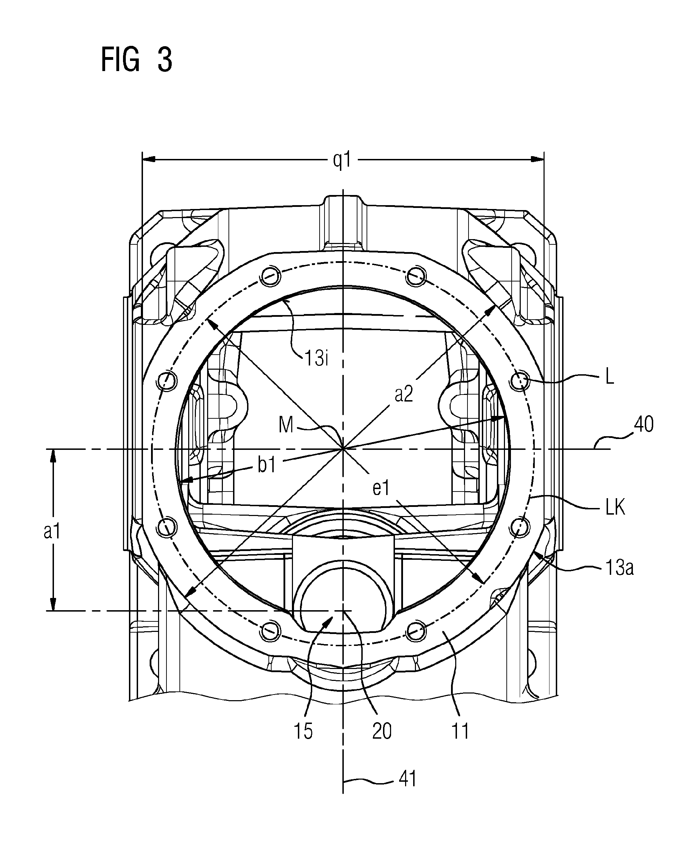

Fig. 3 zeigt dieselbe Ansicht wie in Fig. 1, wobei zusätzlich eine Reihe von Abmessungen angegeben sind, die für die Erfindung von Bedeutung sind.

Die Figur zeigt den Achsabstand a1 der ersten Getriebestufe. Bei dem in Fig. 2 dargestellten Kegelradgetriebe entspricht dieser Achsabstand a1 dem Abstand der Achse 34 des Antriebsritzels 32 und der Achse 20 des damit kämmenden Zahnrads 31b.

Die Figur zeigt außerdem den Abstand q1 der horizontal gegenüber liegenden Abflachungen, d.h. die Länge der Strecke, welche die beiden einander nächstliegenden Punkte der gegenüber liegenden Abflachungen 12 an der Außenkante 13a des Antriebsflansches 11 verbindet. Der Abstand q1 entspricht dem minimalen Außendurchmesser des Antriebsflansches 11, gemessen entlang der Abstandsgerade 40.

Die Figur zeigt auch den minimalen Innendurchmesser b1 des Antriebsflansches 11. Da der Antriebsflansch 11 an seiner Innenkante 13i im Bereich der Achse 20 eine Aussparung 15 aufweist, ist der kleinste Innendurchmesser b1 außerhalb der Aussparung 15 zu messen, z.B. entlang der Abstandsgerade 40. Weiterhin zeigt die Figur den Lochkreisdurchmesser e1, d.h. den Durchmesser des Kreises LK, auf dem die Lochbohrungen L angeordnet sind.

Außerdem zeigt die Figur den maximalen Außendurchmesser a2 des Antriebsflansches 11. Da der Antriebsflansch 11 an seiner Außenkante 13a Abflachungen 12 im Bereich der Verbindungsgerade 40 und der dazu um 90 Grad gedreht verlaufenden Quergerade 41 aufweist, ist der maximale Außendurchmesser a2 außerhalb der Abflachungen 12 zu messen, z.B. in der Diagonale zwischen der Abstandsgerade 40 und der Quergerade 41.

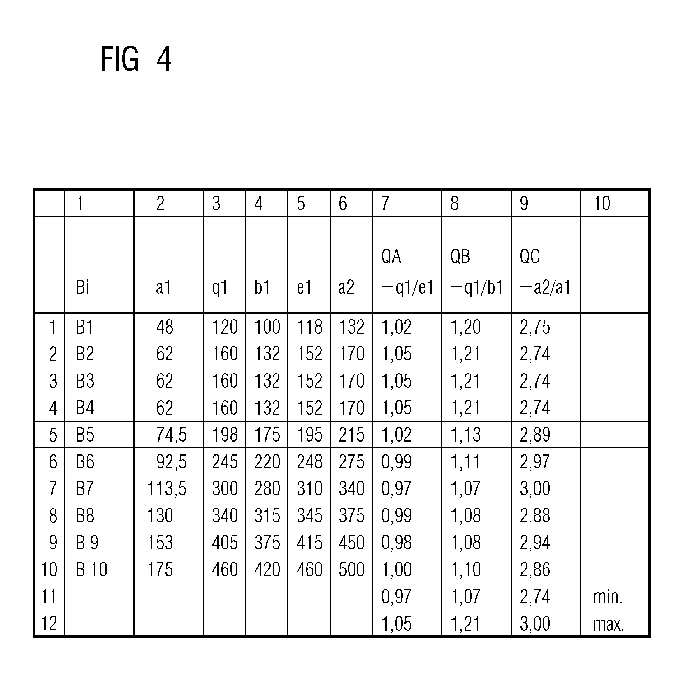

Fig. 4 gibt eine Tabelle der Abmessungen a1, q1, b1, e1 und a2 wieder (siehe Spalten 2 bis 6), sowie bestimmte Verhältnisse QA, QB und QC dieser Abmessungen (siehe Spalten 7 bis 9). Das Verhältnis QA ist das Verhältnis des Abstands q1 der horizontal gegenüber liegenden Abflachungen q1 zu dem Lochkreisdurchmesser e1. Das Verhältnis QB ist das Verhältnis des Abstands q1 der horizontal gegenüber liegenden Abflachungen q1 zu dem minimalen Innendurchmesser b1 des Antriebsflansches 11. Das Verhältnis QC ist das Verhältnis des maximalen Außendurchmessers a2 des Antriebsflansches 11 zu dem Achsabstand a1 der ersten Getriebestufe.

Die Abmessungen und Verhältnisse sind für zwölf verschiedene Baugrößen Bi, wie in Spalte 1 angegeben, aufgeführt. In den Zeilen 13 und 14 sind jeweils die minimalen bzw. maximalen Werte der Spalten 7 bis 9 angegeben.

Die in Fig. 4 angegebenen Werte liegen in derart gewählten Wertebereichen, dass die Wellenlager, Wellen und Verzahnungsteile der Getriebe durch die Gehäuseöffnung gut zugänglich sind. Dadurch wird die Montage und Wartung erheblich vereinfacht.

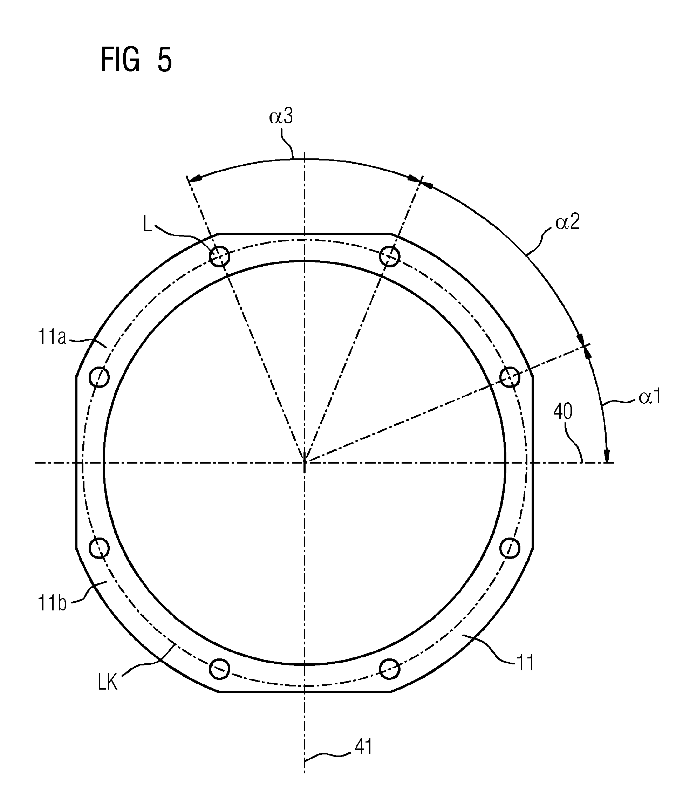

Fig. 5 zeigt eine schematische Ansicht eines Antriebsflansches 11 mit einer Angabe von Winkel α1, α2, und α3 der Lochbohrungen L. Die in jeweils einer Hälfte 11a, 11b des Antriebsflansches 11 auf dem Lochkreis LK liegenden Lochbohrungen L sind in einem vorgegebenen Winkelmuster angeordnet.

Der Scheitelpunkt der Winkel α1, α2, und α3 der drei aufeinander folgenden Lochbohrungen L, ausgehend von der Abstandsgeraden 40 die erste, zweite und dritte Lochbohrung genannt, ist der Mittelpunkt M des Antriebsflansches 11. Der eine Schenkel des ersten Winkels α1 ist die Abstandsgerade 40, der andere Schenkel verläuft durch die Achse der ersten Lochbohrung L. Der eine Schenkel des zweiten Winkels α2 verläuft durch die Achse der ersten Lochbohrung L, der andere Schenkel durch die Achse der zweiten Lochbohrung L. Der eine Schenkel des dritten Winkels α3 verläuft durch die Achse der zweiten Lochbohrung L, der andere Schenkel durch die Achse der dritten Lochbohrung L.

Die vierte in der Hälfte 11a des Antriebsflansches 11 liegende Lochbohrung L ist symmetrisch zu der ersten Lochbohrung L angeordnet.

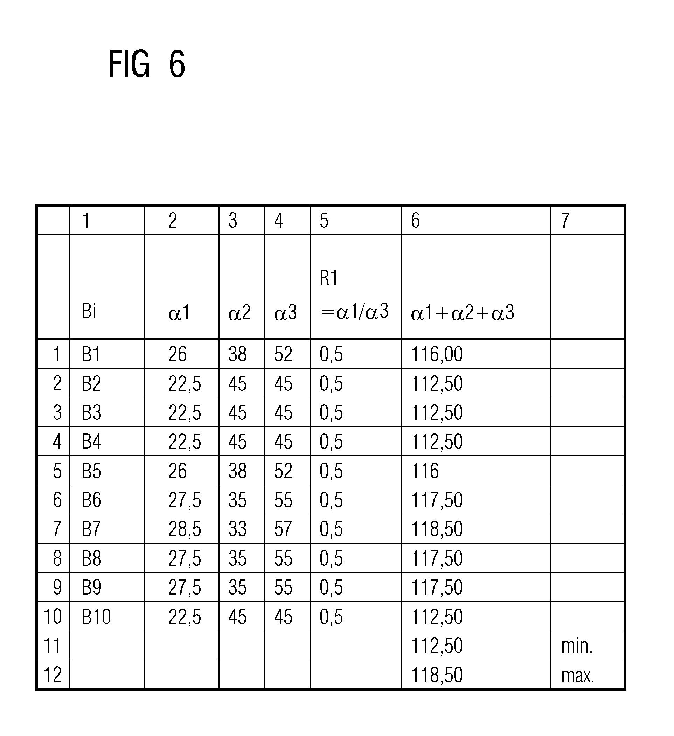

Fig. 6 gibt eine Tabelle der Winkel α1, α2, und α3 wieder (siehe Spalten 2 bis 4), sowie ein daraus gebildetes Verhältnis R1 (siehe Spalte 5) und die Winkelsumme der drei Winkel (siehe Spalte 6). Das Verhältnis R1 ist das Verhältnis des ersten Winkels α1 zu dem dritten Winkel α3. Die Abmessungen und Verhältnisse sind für zwölf verschiedene Baugrößen Bi, wie in Spalte 1 angegeben, aufgeführt. In den Zeilen 13 und 14 sind die minimalen bzw. maximalen Werte der Spalte 6 angegeben.

Die acht Lochbohrungen L des Antriebsflansches 11 sind sowohl bezüglich des Mittelpunkt M des Antriebsflansches 11 punktsymmetrisch auf dem Antriebsflansch 11 angeordnet als auch bezüglich der Verbindungsgerade 40 und der Quergerade 41 symmetrisch auf dem Antriebsflansch 11 angeordnet. Daher ist der erste Winkel α1 halb so groß wie der dritte Winkel α3, d.h. das Verhältnis R1 beträgt konstant 0,5.

Die in Fig. 6 angegebenen Winkel liegen in derart gewählten Wertebereichen, dass ein für alle Getriebegehäuse kongruentes Lochbild geschaffen wird, wodurch die Austauschbarkeit erhöht und die Lagerhaltung vereinfacht wird.

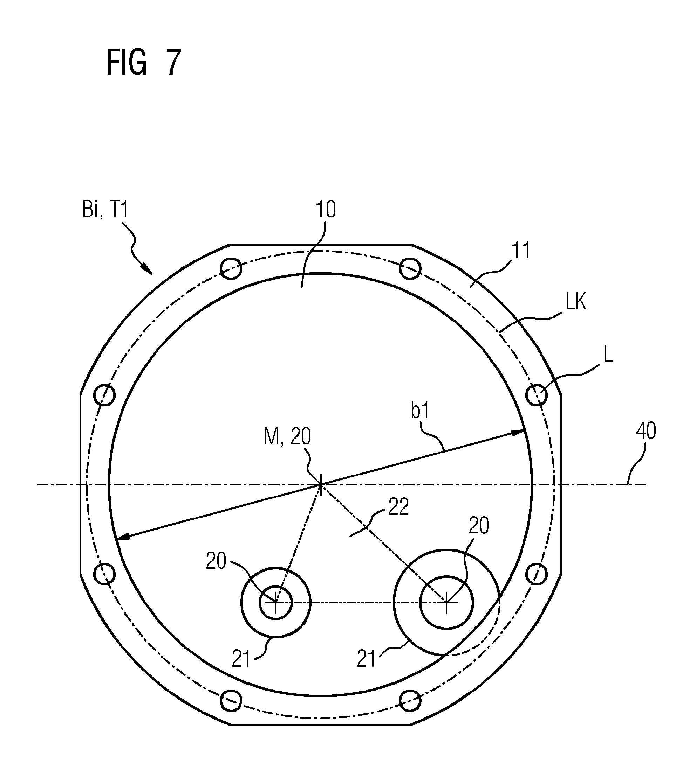

Fig. 7 bis 9 zeigen schematische Ansichten eines Antriebsflansches 11 für Getriebegehäuse verschiedener Bautypen Tj, aber derselben Baugröße Bi.

Fig. 7 zeigt einen Antriebsflansch 11 eines Getriebegehäuses des Bautyps T1 "Stirnradgetriebe". Die senkrecht zur Ebene des Antriebsflansches 11 verlaufenden Achsen 20 von zur Aufnahme von Wellenlagern für Verzahnungsteile vorgesehenen Lagersitzen 21 liegen, in Blickrichtung senkrecht zur Ebene des Antriebsflansches 11, innerhalb des minimalen Innendurchmessers b1 des Antriebsflansches 11. Die jeweils um die beiden unteren Achsen 20 gezogenen Kreise geben den Innen- und Außendurchmesser der Lagerstelle 21 an. Das durch die Achsen 20 gebildete Lagerdreieck 22 liegt somit vollständig innerhalb der Gehäuseöffnung 10.

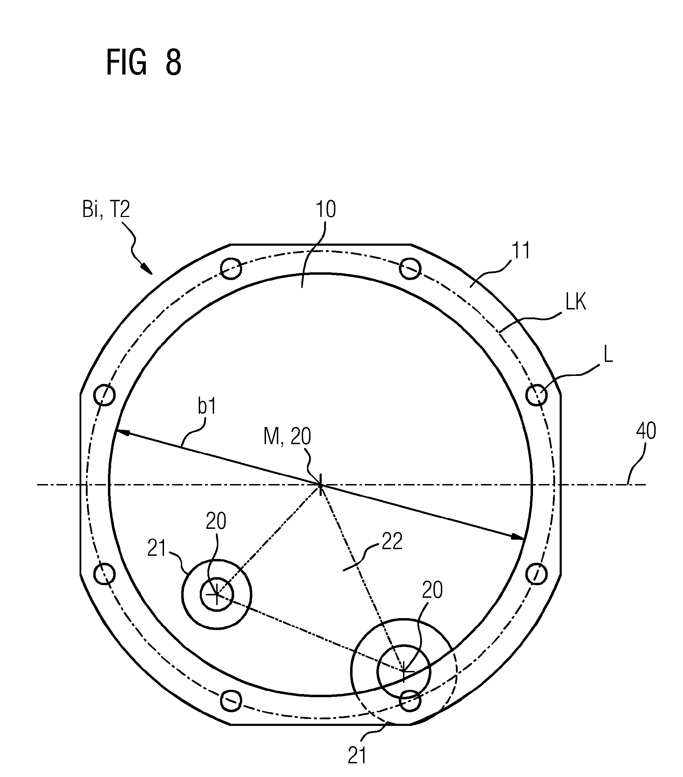

Fig. 8 zeigt einen Antriebsflansch 11 eines Getriebegehäuses des Bautyps T2 "Flachgetriebe". Die senkrecht zur Ebene des Antriebsflansches 11 verlaufenden Achsen 20 von zur Aufnahme von Wellenlagern für Verzahnungsteile vorgesehenen Lagersitzen 21 liegen, in Blickrichtung senkrecht zur Ebene des Antriebsflansches 11, innerhalb des minimalen Innendurchmessers b1 des Antriebsflansches 11. Die jeweils um die beiden unteren Achsen 20 gezogenen Kreise geben den Innen- und Außendurchmesser der Lagerstelle 21 an. Das durch die Achsen 20 gebildete Lagerdreieck 22 liegt somit vollständig innerhalb der Gehäuseöffnung 10.

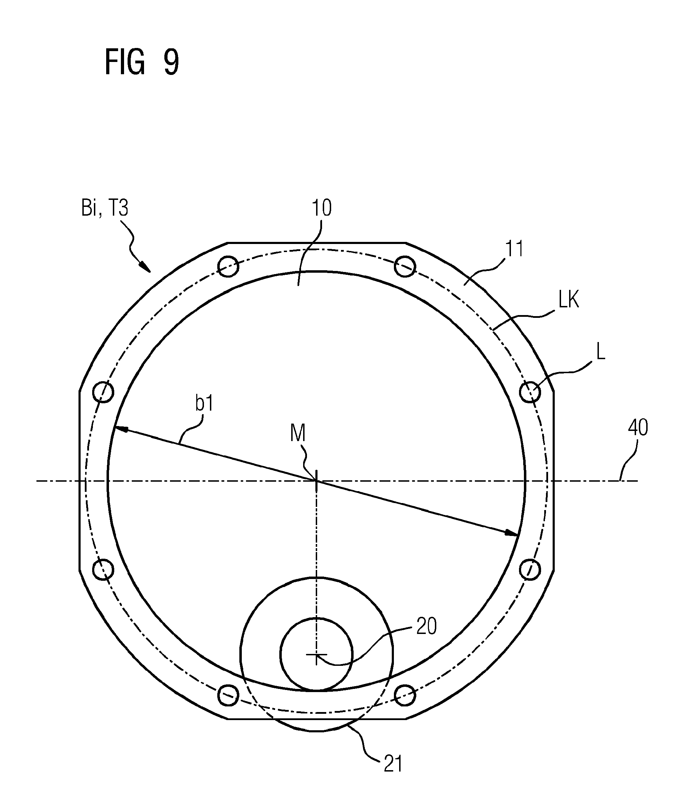

Fig. 9 zeigt einen Antriebsflansch 11 eines Getriebegehäuses des Bautyps T3 "Kegelradgetriebe". Die senkrecht zur Ebene des Antriebsflansches 11 verlaufende Achsen 20 des zur Aufnahme eines Wellenlagers für Verzahnungsteile vorgesehenen Lagersitzes 21 liegen, in Blickrichtung senkrecht zur Ebene des Antriebsflansches 11, innerhalb des minimalen Innendurchmessers b1 des Antriebsflansches 11. Die beiden um die untere Achse 20 gezogenen Kreise geben den Innen- und Außendurchmesser der Lagerstelle 21 an.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Baureihe von Getriebegehäusen (Gij), umfassend verschiedene Baugrößen (Bi),
wobei jede Baugröße (Bi) eine Serie verschiedener Bautypen (Tj) umfasst, welche für mindestens zwei verschiedene Getriebetypen folgender Typen geeignet sind: Stirnradgetriebe, Kegelradgetriebe, Flachgetriebe und Schneckengetriebe,
wobei jedes Getriebegehäuse (Gij) antriebsseitig eine Gehäuseöffnung (10) aufweist, welche von einem Antriebsflansch (11) zum Anschluss eines Motors, einer Adapterplatte oder eines weiteren Getriebes umgeben ist, und
wobei in mindestens zwei verschiedenen Baugrößen (Bi) jeweils für mindestens zwei verschiedene Bautypen (Tj) die senkrecht zur Ebene des Antriebsflansches (11) verlaufenden Achsen (20) von zur Aufnahme von Wellenlagern (30) für Verzahnungsteile (31) vorgesehenen Lagerstellen (21), in Blickrichtung senkrecht zur Ebene (14) des Antriebsflansches (11), innerhalb eines minimalen Innendurchmessers (b1) des Antriebsflansches (11) liegen.

2. Baureihe nach Anspruch 1,
wobei in mindestens zwei verschiedenen Baugrößen (Bi) jeweils für alle Bautypen (Tj) die besagten Achsen (20) innerhalb des minimalen Innendurchmessers (b1) des Antriebsflansches (11) liegen.

3. Baureihe nach Anspruch 1 oder 2,
wobei bei einem für ein Stirnradgetriebe geeigneten Bautyp (Tj) in allen Baugrößen (Bi) ein Verhältnis (QC) von einem maximalen Außendurchmesser (a2) des Antriebsflansches (11) zu einem Achsabstand (a1) von zur Aufnahme von Wellenlagern (30) für Verzahnungsteile (31) einer ersten Getriebestufe vorgesehenen Lagerstellen (21) in einem Bereich von ca. 2,74 bis ca. 3,00 liegt.

4. Baureihe nach einem der vorhergehenden Ansprüche,
wobei bei einem für ein Stirnradgetriebe geeigneten Bautyp (Tj) in allen Baugrößen (Bi) ein Verhältnis (QB) von einem minimalen Außendurchmesser (q1) des Antriebsflansches (11) zu einem minimalen Innendurchmesser (b1) des Antriebsflansches (11) in einem Bereich von ca. 1,07 bis ca. 1,21 liegt.

5. Baureihe nach einem der vorhergehenden Ansprüche,
wobei in dem Antriebsflansch (11) Lochbohrungen (L) angeordnet sind, welche auf einem Lochkreis (LK) mit einem Durchmesser (e1) liegen und zur Aufnahme von Verbindungsschrauben vorgesehen sind, und wobei bei einem für ein Stirnradgetriebe geeigneten Bautyp (Tj) in allen Baugrößen (Bi) ein Verhältnis (QA) von einem minimalen Außendurchmesser (q1) des Antriebsflansches (11) zu dem Lochkreisdurchmesser (e1) in einem Bereich von ca. 0,97 bis ca. 1,05 liegt.

6. Baureihe nach einem der Ansprüche 4 und 5,
wobei der Antriebsflansch (11) an zwei gegenüberliegenden Seiten Abflachungen (12) der Außenkante (13a) aufweist, deren Abstand voneinander den minimalen Außendurchmesser (q1) des Antriebsflansches (11) definiert.

7. Baureihe nach einem der vorhergehenden Ansprüche,
wobei der Antriebsflansch (11) zur Aufnahme von Verbindungsschrauben vorgesehene Lochbohrungen (L) aufweist, welche punktsymmetrisch auf einem Lochkreis (LK) mit einem Durchmesser (e1) angeordnet sind.

8. Baureihe nach Anspruch 7,
wobei der Lochkreis (LK) über seinen gesamten Umfang ununterbrochen auf dem Antriebsflansch (11) verläuft.

9. Baureihe nach Anspruch 7 oder 8,
wobei der im Wesentlichen kreisringförmige Antriebsflansch (11) an zwei gegenüberliegenden Seiten Abflachungen (12) der Außenkante (13a) aufweist und in dem Antriebsflansch (11) acht Lochbohrungen (L) angeordnet sind, wobei in jeder Hälfte (11a, 11b) des durch eine Abstandsgerade (40) der Abflachungen (12) geteilten Antriebsflansches (11) vier Lochbohrungen (L) angeordnet sind.

10. Baureihe nach einem der Ansprüche 7 bis 9,
wobei die Lochbohrungen (L) außerhalb der und symmetrisch zu der Abstandsgerade und einer senkrecht dazu verlaufenden Quergerade (41) angeordnet sind.

11. Baureihe nach einem der Ansprüche 9 und 10,
wobei die vier in einer Flanschhälfte (11a, 11b) angeordneten Lochbohrungen (L) so positioniert sind, dass eine erste Lochbohrung (L1) in einem ersten Winkel (α1) zur Abstandsgerade (40), eine zweite Lochbohrung (L2) in einem zweiten Winkel (α2) zur ersten Lochbohrung (L1) und eine dritte Lochbohrung (L3) in einem dritten Winkel (α3) zur zweiten Lochbohrung (L2) angeordnet ist,
wobei die Winkel jeweils von einem Mittelpunkt (M) des Lochkreises (LK) aus gesehen gemessen sind, und
wobei ein Verhältnis (R1) von dem ersten (α1) zu dem dritten Winkel (α3) konstant, vorzugsweise 1/2, ist und eine Summe der drei Winkel in einem Bereich von 112,5 bis 118,5 liegt.

12. Getriebe, insbesondere Stirnradgetriebe, Kegelradgetriebe, Flachgetriebe oder Schneckengetriebe, mit einem Getriebegehäuse (Gij) aus einer Baureihe nach einem der vorhergehenden Ansprüche.
